# EUROPEAN PATENT APPLICATION

(11) **EP 3 170 967 A2**
(43) Date of publication of application: **24.05.2017**
(21) Application number: 15739025.3
(22) Date of filing: 06.07.2015
(51) Int. Cl.: E21B 43/12, E21B 17/10, F04B 47/02

(54) **LOAD REDUCTION DEVICE FOR DEEP WELL PUMPING SYSTEMS AND PUMPING SYSTEM COMPRISING SAID DEVICE**

(30) Priority: 15.07.2014 AR P140102614
(71) Applicant: Yorio, Pablo Martin, 9000 Comodoro Rivadavia (AR)
(72) Inventor: Yorio, Pablo Martin, 9000 Comodoro Rivadavia (AR)
(74) Representative: Jeannet, Olivier
(86) International application number: PCT/IB2015/055097
(87) International publication number: WO 2016/009302

(57) **Abstract**

A load reduction device (10) for a deep well (1) pumping system, which is driven by a sucker rod string (6) with reciprocating motion and drives a subsurface pump (4); and a deep well (1) pumping system including the load reduction device (10). Where the load reduction device (10) has a reduction ratio which defines how much are reduced the loads acting on the sucker rod string (6); and includes a speed reducer (13) of which several preferred embodiments are described.

## Description

### TECHNICAL FIELD

This invention relates to a load reduction device for deep well pumping systems and to a deep well pumping system comprising said load reduction device. Said pumping system is used for pumping of fluids from a well, such as water and/or hydrocarbons from subterranean formations or reservoirs, and is preferably applied to oil wells.

### BACKGROUND ART

The sucker-rod pumping is the artificial lift system most widely used worldwide for pumping water and/or hydrocarbons from subterranean formations or reservoirs. This system mainly includes a pumping unit, which converts the rotary motion of a motor into a reciprocating motion, and a sucker rod string that transmits the reciprocating motion generated by said pumping unit to a subsurface pump located at the bottom of the well. The high loads that said sucker rod string must withstand make it really heavy, surpassing in some cases 10 tons of weight for deep wells, and frequently becoming heavier than the fluid column to be lifted. This high weight generates high tensile loads on the rods themselves and also on the pumping unit, which in each pump cycle must withstand the static loads associated with the weight of the rods and the fluid, and the dynamic loads associated mainly with the acceleration and deceleration of the sucker rod string. Therefore, the pumping units must be designed to withstand high loads, which in some cases exceed 20 tons. The pumping units capable of withstanding said loads must be very robust, large, difficult to transport, difficult to install and very costly.

During the upstroke of the pump, the sucker rod string must withstand the weight of the fluid column, the weight of the sinker bars generally used in the sucker-rod pumping, the loads associated with friction, the inertial loads and the loads due to its own weight. The sucker rod string must withstand the 100% of the sum of said loads. Therefore, it must withstand high loads that define the minimum cross-sectional area for the rods. Said cross-sectional area defines the weight per unit length of the sucker rods and the value of the loads due to its own weight, which vary with the vertical position along the sucker rod string and reach their maximum at the surface.

Mainly due to the high loads and the restrictions on the maximum diameter of the sucker rods generally imposed by the internal diameter of the production tubing, fatigue failures on the sucker rods are very frequent, stopping the production of the well and requiring a costly repair.

Additionally, the mechanical strength of the sucker rod string limits the maximum depth of application of the conventional sucker-rod pumping system, due to which many deep wells must be under-exploited, producing a lower amount of fluid than the formation can offer. In these cases, to reduce the loads to a value that can be withstood by the sucker rod string, generally are used pumps with smaller plungers, which usually limit the production. Sometimes long stroke pumping units are used, which allow a reduction of the strokes per minute of the pump and indirectly generate a reduction of the loads associated with friction and inertia over the sucker rods. Other common solutions in the prior art are to use higher strength sucker rods as well as pumping units with higher load capacity.

The load reduction solutions described above for the conventional sucker-rod pumping system are considered as the closest prior art with respect to the present invention. Other solutions have been developed but they have a limited or non-existent practical application. Examples of said solutions are the hydraulic devices that use the pressure differential between the casing and the tubing string to generate an upward force that reduces the loads on the sucker rods. Some variations of these devices have been disclosed in Chinese patents, such as CN 202673666U (Li Dechuan et al), CN 202645951 U (Fan Liguo et al), CN 202157953U (Jindong Wang et al), CN 201714351U (Bingsheng Liu et al), CN 201705231 U (Wu Jun et al), CN 201292939Y (Wenrui Hu et al), CN 201209431Y (Xuanlai Zhang), CN 201074584Y (Yarong Fu et al), CN 201047271Y (Liangui Ou), CN 102359362A (Zhiqiang Huang et al), CN 2856483Y (Li Yanmei Zhang), CN 2353932Y (Hou Zong et al) and CN 1283747A (Zhou Liren et al). The devices described in these documents have serious technical problems. Among other things because they generate a small load reduction, that does not justify the additional cost and complexity caused by installing such devices in a well; in many cases the load reduction is achieved using the work done by the pressure forces of the formation, but this energy in the sucker-rod pumping also serves for passing the fluid through the standing valve and therefore helps with the plunger elevation in the upstroke; the pressure drop on the fluid and the friction forces in these hydraulic devices can be important, and even increase the loads on the sucker rods; in addition these devices cause serious compression problems and slow the descent of the plunger during the downstroke.

The device described in Canadian patent CA 2331933A1 (Betancourt), works similarly to those mentioned above, but also requires the injection of a fluid from the surface. Another variation is disclosed by the same author in the Canadian patent CA 2331932A1 (Betancourt), and it consists of a device containing a counterweight spring which reduces the loads on the sucker rods during the upstroke, but creating high compressive loads during the downstroke, when the plunger of the pump is free from the fluid column load and must descent by its own weight applying the lowest possible compression force on the sucker rods.

In Chinese patents CN 2505617Y (Chen Wenhua et al), CN 1056436C (Zhou Liren et al), CN 2293661Y (Liu Jiaqiu), CN 2345679Y (Qiu Lijun et al), CN 200946486Y (Qiang Baogang Lu) and CN 1042212A (Yiwen Pan et al), it is disclosed the use of amplification devices for increasing the plunger stroke with respect of the stroke of the sucker rods. Said devices increase the loads on the sucker rods, precisely the opposite of the desired effect with the present invention. Increasing the loads on the sucker rods in both the upstroke and the downstroke, these devices can generate serious compression problems during the downstroke, due to the higher inertial and frictional forces generated on the pump plunger for its increased travel speed, which creates enormous compression problems on the different elements of the mechanisms and the sucker rods.

Also, were disclosed mechanisms that reverse the direction of movement between their input and output members, causing even more severe compression problems. Examples of said mechanisms can be found in patents such as US 2.918.014A (Gould), CN 203516038U (Zhao Guangqi et al) and CN 2748671Y (Zhang Xuanlai). Other documents disclose mechanisms that might appear to be similar to those of the present invention, but none of them solves the problem of the high loads on the sucker rods achieved with this invention, and have a totally different principle of operation. Examples of such documents are the U.S. patents US 1.494.510 (Squires), US 2.975.721 (Chancellor et al) and US 5.873.411A (Prentiss).

Many of the mechanisms described in the above documents have only one gear stage, which is not enough to transmit the necessary power to produce oil with a subsurface pump and therefore it can be difficult or impossible to achieve proper operation. Another frequent problem is the lack of sinker bars between the pump and the described devices, which forces their components to work under compression loads when said components are not capable to withstand this kind of loads, and it also might make difficult or impede the plunger descent during the downstroke, generating production problems.

Therefore, one objective of the present invention is to solve the problem of the high loads on the sucker rods, analyzing the problem with a completely different approach, allowing the achievement of important reductions on the loads when necessary, totally avoiding the major problems associated with the compressive loads on the system, and avoiding the premature failures due to the lack of power transmission capacity.

### DISCLOSURE OF THE INVENTION

To eliminate the problem of high loads on the sucker-rod pumping system, instead of manufacturing sucker rods and pumping units with a higher load capacity, by means of the present invention, the loads on the system are reduced by connecting a load reduction device between the sucker rods and the subsurface pump which is driven by said sucker rods. Thus, it is achieved that the loads on the sucker rods are reduced proportionately to the reduction ratio of said device. Therefore, it can be selected which load will be withstood by the lower end of the sucker rod string by calculating the loads under the load reduction device and selecting a load reduction device with an appropriate reduction ratio. In the conventional sucker-rod pumping system, there are basically three key variables for controlling the desired production: the diameter of the pump plunger, the plunger stroke length and the plunger speed. The present invention adds a new variable to the system, which is called reduction ratio. The reduction ratio can be any number between 0 and 1, which represents the relationship between the force applied in the input element of the load reduction device, and the force generated on the output element of said device. The load reduction device can have any reduction ratio, providing great practical advantages for reduction ratios in the range of 0.1 to 0.5.

For example, if a reduction ratio of 1:10 or 0.1 is used, means that for every unit of force applied at the input of the load reduction device, at the output is generated a force 10 times higher. The input element of said device must have a displacement 10 times higher than its output element. By using a load reduction device with a reduction ratio of 1:10, the force at the input element is only 10% of the force needed to lift the loads acting on the output element.

A brief example is presented in order to understand the great impact that can be produced by incorporating said device in an oil well. In a well of 3000 m depth, the maximum load on the lower end of the sucker rod string, which is connected to sinker bars, is 5000 kg. A load reduction device is connected between the sinker bars and the lower end of the sucker rod string. By using a reduction ratio of 1: 8 or 0.125, the loads to be withstood by the lower end of the sucker rod string are reduced to a 12.5%, multiplying by 8 its stroke length. That means that the lower end of the sucker rod string now must withstand a maximum load of 625 kg, much lower than the 5000 kg that the conventional system must withstand in the same point. If sucker rods of the same material are compared, at the lower end of the sucker rod string is required a cross-sectional area and therefore a weight per unit length 8 times less. A simple analysis shows that along 3000 m the total weight of the sucker rod string may be reduced up to 90% compared to the weight of a sucker rod string of the conventional system, because the sucker rods of the new system must transmit a load 8 times less and they have a weight per unit length which is 8 times less at its lower end. This surprising effect cannot be produced by any other device available in the prior art. Also, the maximum load on the pumping unit can be reduced by up to 90%, due to the much lower weight of the sucker rod string and because it only transmits the 12.5% of the maximum loads generated at the bottom of the well, enabling the design of much lighter, cheaper and easier to transport pumping units.

One of the major limitations of the conventional sucker-rod pumping system is its inability to work at high depth and/or high volume oil wells. The extremely high loads generated on the pump plunger in such wells cannot be withstood by the sucker rod string and/or the pumping unit, forcing to use a different pumping system, which is generally more expensive. Another option is to limit the production by using smaller pump plungers, in order to reduce the loads to a range that the system can withstand. By using the present invention, it is possible to select the plunger diameter required to achieve the desired production regardless of the depth of the well, completely eliminating this major limitation of the conventional sucker-rod pumping system.

### BRIEF DESCRIPTION OF THE DRAWINGS

A better understanding of the present invention can be obtained when the following detailed description of the preferred embodiment and some alternative embodiments is considered in conjunction with the following drawings, in which:
Figure 1A is a schematic diagram of a deep well operated by the conventional sucker-rod pumping system;
Figures 1B, 1C and 1D are schematic diagrams of a deep well operated by a pumping system which includes a load reduction device, wherein said device is, respectively, inserted within the tubing (1 B), connected to the tubing and supported by the same (1 C), and supported by the casing (1 D);
Figure 2A is a diagram of the load reduction device at the end of the upstroke of a pump plunger;
Figure 2B is a diagram of the load reduction device at the end of the downstroke of the pump plunger; where its attachment means is cut in half along its longitudinal axis to observe the inside, and the casing is not shown;
Figure 2C is an enlarged top view of the load reduction device of Figure 2A installed within the casing;
Figure 2D is an enlarged detail view of a part of the driving transmission element and of its connection to the sucker rod string;
Figure 2E is an enlarged detail view of Figure 2C where the casing, the tubing and the connections between the attachment means and the tubing are not shown;
Figure 3A shows the operation of the load reduction device of Figure 2, at the end of the downstroke (left) and at the end of the upstroke (right);
Figure 3B is an enlarged detail view of the driven transmission element used in this example and its connection with the rest of the system;
Figure 3C only shows an enlarged detail view of the speed reducer at the end of the upstroke;
Figure 3D is a comparison between the cross-sectional area of a conventional sucker rod and of a small diameter sucker rod, both of them within the tubing;
Figures 4A, 4B and 4C are, respectively, a perspective view, a side view and a top view of the first preferred embodiment of the speed reducer;
Figure 4D is a detail view of one of the two bars with two racks that comprise the driven transmission element of the first preferred embodiment of the speed reducer;
Figure 4E is a side view of an example of speed reducer according to the first preferred embodiment, but with three sets of movable elements in series;
Figures 5A, 5B, 5C, 5D and 5E are, respectively, a perspective view, a side view, a top view, a second perspective view and a third perspective view of the second preferred embodiment of the speed reducer;
Figure 5F is a perspective detail view of a way of attachment between the two double racks that comprise a driven transmission element of the second preferred embodiment of the speed reducer;
Figures 6A, 6B and 6C are, respectively, a perspective view, a side view and a top view of the third preferred embodiment of the speed reducer;
Figure 6D is a perspective view of an alternative embodiment with an asymmetric arrangement of the third preferred embodiment of the speed reducer;
Figures 7A, 7B and 7C are, respectively, a perspective view, a front view and a side view of the fourth preferred embodiment of the speed reducer;
Figure 7D is a perspective view of a speed reducer according to the fourth preferred embodiment, wherein the rotary transmission elements of several sets of movable elements engage each other;
Figures 8A, 8B, 8C and 8D are, respectively, a side view, a perspective view, a front view and a top view of the fifth preferred embodiment of the speed reducer;
Figure 8E is a perspective view of an example of speed reducer according to the fifth preferred embodiment, but with three sets of movable elements in series, shown at the end of the downstroke (left) and at the end of the upstroke (right);
Figure 9A is a perspective view of an alternative embodiment for a multiple speed reducer comprising three speed reducers in series;
Figure 9B is a perspective view of an alternative embodiment with an asymmetric arrangement of the fifth preferred embodiment of the speed reducer;
Figure 9C is a perspective view of another alternative embodiment with an asymmetric arrangement of the fifth preferred embodiment of the speed reducer, comprising several sets of movable elements as those of Figure 9B arranged in series;
Figures 10A, 10B, 10C and 10D are, respectively, a perspective view, a side view, a second perspective view and a top view of the sixth preferred embodiment of the speed reducer;
Figures 11A, 11B and 11C are, respectively, a perspective view, a top view and a side view of the seventh preferred embodiment of the speed reducer;
Figures 12A and 12B are, respectively, a perspective view and a side view of the eighth preferred embodiment of the speed reducer;
Figure 13A is a perspective view of an example of conventional block and tackle;
Figure 13B is a perspective view of the ninth preferred embodiment of the speed reducer; and
Figures 14A and 14B are, respectively, a perspective view of the front and a perspective view of the back of the tenth preferred embodiment of the speed reducer.

### DETAILED DESCRIPTION OF THE INVENTION

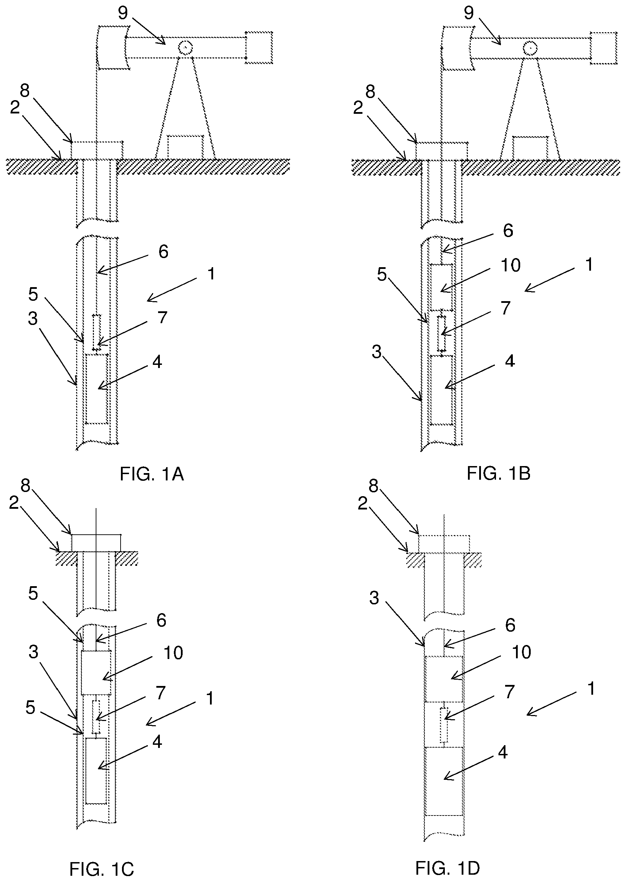

In Figure 1A is shown a schematic diagram of a deep well 1, which in this case an oil well operated by the conventional sucker-rod pumping system. The deep well 1 extends from the surface 2 to the desired depth. A well casing 3 is installed. The production tubing or tubing 5, which may comprise a conventional tubing and/or a coiled tubing, extends within the casing 3 from the surface 2 up to the desired depth. A subsurface pump 4 is attached to the tubing 5 at the desired depth. Said subsurface pump 4 is generally coupled to a set of sinker bars 7, which in turn are coupled to a sucker rod string 6, where said sucker rod string 6 extends to the surface 2 up to pass through the stuffing box 8. Said sinker bars 7 are usually similar to but heavier than the sucker rods. The sucker rod string 6 is coupled to a pumping unit 9 which generates a reciprocating motion on said sucker rod string 6. The sucker rod string 6 is the driving source and transmits mechanical power in the form of reciprocating motion to the plunger of the subsurface pump 4, in order to pump fluid. When indicated that an element drives the subsurface pump 4, it means said element makes the subsurface pump 4 operate and pump fluid. The sucker rod string 6 can comprise for example conventional sucker rods, or continuous sucker rods, or sucker rods with special connections, or one or more wires, or one or more ropes, or a coiled tubing string, or any other element or combination of elements capable of transmitting reciprocating motion inside the deep well 1. In this example, is shown an insert pump (also called rod pump) attached within the tubing 5, but in other cases can also be used the so-called tubing pumps or casing pumps.

In Figure 1B is shown an embodiment of a pumping system which includes a load reduction device 10. In this particular case, said load reduction device 10 is coupled between the sucker rod string 6, which is the driving source and transmits reciprocating motion to said load reduction device 10; and the sinker bars 7, to which said load reduction device 10 provides mechanical power and reciprocating motion. The sinker bars 7 help the descent of the sucker rod string 6 and of the plunger of the subsurface pump 4 during the downstroke, so they are commonly used and included in this example. The load reduction device 10 is fixed with respect to the tubing 5, which acts as a support element of said load reduction device 10.

It is called support element to the element that complies with the function of supporting the loads of the load reduction device 10. Depending on the type of installation, either in accordance with Figures 1B, 1C, 1D or according to another embodiment, said support element could be the casing 3 or the tubing 5, not ruling out the use of other types of support.

In the example of Figure 1B, the load reduction device 10 is inserted and fixed within the tubing 5, which therefore is the support element. Said load reduction device 10 drives the subsurface pump 4, which in this case is a pump of the type called insert pump that is inserted within the tubing 5. In other embodiments, could be used a tubing pump, which is connected to the tubing 5 instead of inserted within it.

In the embodiment of the pumping system of Figure 1C, the load reduction device 10 is not inserted within the tubing 5, instead it is coupled between two segments of the tubing 5, where said load reduction device 10 hangs from the upper segment of tubing 5, which therefore also acts as the support element of said load reduction device 10. In this case, in the length occupied by the load reduction device 10 can be installed a segment of tubing 5 with different diameter or at least one conduit that allows the flow of the produced fluid along said load reduction device 10. At the lower end of the load reduction device 10 is coupled a lower segment of tubing 5, within which is installed a subsurface pump 4, which in this case is an insert pump, but in other cases could be used for example a tubing pump. In this embodiment, the fluid pressurized by the subsurface pump 4 flows through said lower segment of tubing 5, then flows through the load reduction device 10 and finally flows through the upper segment of tubing 5 up to reach the surface 2.

In the embodiment of the pumping system of Figure 1D, the load reduction device 10 is supported by the casing 3, which acts as the support element. It is used a subsurface pump 4, which in this case is a casing pump inserted within the casing 3, and the tubing 5 is not used. In this case, the fluid produced through the casing 3 must pass through the load reduction device 10. In Figures 1C and 1D the pumping unit 9 is not shown.

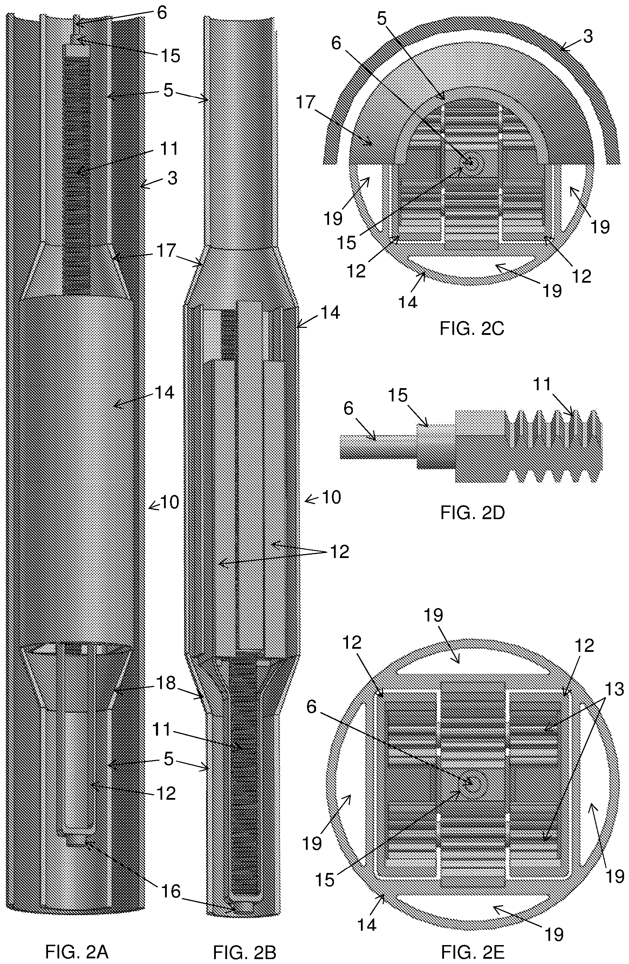

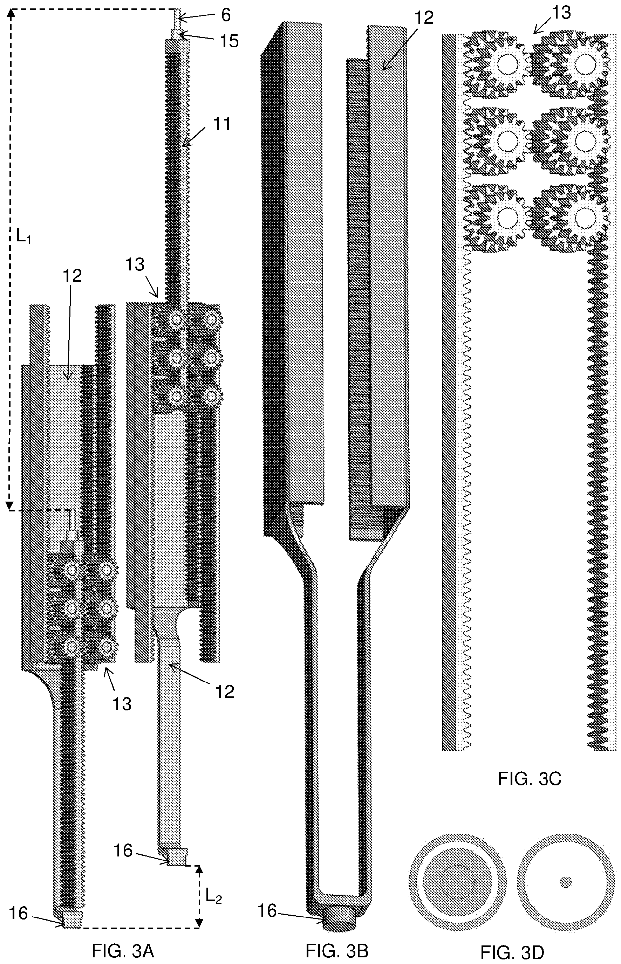

In Figures 2A, 2B, 2C and 2E is shown the detail of an installation form corresponding to the one described in Figure 1C, where the load reduction device 10 is coupled between an upper segment and a lower segment of tubing 5 by means of the connections 17 and 18, and where said lower segment of tubing 5 supports the subsurface pump 4, as shown in Figure 1C. In this case said load reduction device 10 hangs from the tubing 5, which acts as the support element. All the installation is positioned within the casing 3. The transmission element 11 has a reciprocating motion driven by the sucker rod string 6, to which is coupled by means of the connection 15, which means that it reciprocates in the deep well 1 and in doing so drives the speed reducer 13, which is shown in Figure 3C. For this reason, said transmission element 11 is called driving transmission element 11 and its driving source is the sucker rod string 6, of which only a small segment is shown in Figures 2A, 2C, 2D, 2E and 3A.

It is called speed reducer 13 to the machine, mechanism or set of mechanisms that receives an input power comprising reciprocating motion, which is provided by the driving transmission element 11; and develops an output power comprising reciprocating motion at a reduced speed in a transmission element 12, which is called driven transmission element 12. Said driven transmission element 12 moves substantially in the same direction and sense that the driving transmission element 11, but at a lower speed. Therefore, the driven transmission element 12 travels a shorter distance and makes a higher force than the driving transmission element 11. Said driven transmission element 12 is the driving source and transmits reciprocating motion to the plunger of the subsurface pump 4, therefore said subsurface pump 4 is driven by said driven transmission element 12.

In Figure 3A is shown that the travel (L₁) of the driving transmission element 11 is in this example eight times higher than the travel (L₂) of the driven transmission element 12. The speed reducer 13 which is shown in this example has a reduction ratio of 1: 8 or 0.125, and its operation will be described in detail below.

In the embodiments of the pumping system shown in Figures 1B, 1C and 1D, the driven transmission element 12 is coupled to sinker bars 7 by means of a connection 16, where said sinker bars 7 are coupled to the subsurface pump 4 and drive it. The sinker bars 7 can comprise exclusively sinker bars, or a second sucker rod string located below the load reduction device 10, or a combination of sinker bars and sucker rods. The exchange between sinker bars and sucker rods is a common practice in the industry. The driven transmission element 12 is coupled to the subsurface pump 4, where said coupling can be performed either directly, where the driven transmission element 12 is coupled directly to the subsurface pump 4 without using sinker bars 7; or indirectly, where for example are coupled sinker bars 7 between the driven transmission element 12 and the subsurface pump 4.

The load reduction device 10 comprises a speed reducer 13, wherein said speed reducer 13 comprises a set of fixed elements and at least one set of movable elements. Said at least one set of movable elements moves due to the engagement with other elements, while said set of fixed elements is fixed with respect to the support element, which can be for example the tubing 5 or the casing 3. Any type of speed reducer 13 that is properly coupled between the driving transmission element 11 and the driven transmission element 12 can produce a load reduction in the load reduction device 10. In the present application are described several alternative embodiments for the speed reducer 13, which are specially designed in order to transmit high powers within the small cross-sectional areas of the deep wells.

Said set of fixed elements can be directly attached to the support element, or can be attached to it by using an attachment means 14. In Figures 2A, 2B, 2C and 2E is shown an attachment means 14 that in this case is a housing, whose main function is to attach the racks comprising the set of fixed elements of the speed reducer 13 shown in Figure 3C with respect to the support element, and transmit all the loads generated in said speed reducer 13 to said support element.

In Figures 2A, 2B and 2C is only shown one cut in half of the tubing 5, the casing 3 and the connections 17 and 18 which connect the tubing 5 to the upper and lower ends of the attachment means 14. Said tubing 5, in this case, is the support element. In Figure 2B, is also cut in half the attachment means 14 in order to look inside the load reduction device 10, while the casing 3 is not shown. In Figure 3A the driven transmission element 12 is cut in half.

On the left side of the Figure 3D is shown the cross-sectional area of a conventional 1" sucker rod with a slimhole coupling, while on the right side is shown a sucker rod with a much smaller diameter, as the one that could be used after a really important load reduction produced by the incorporation said load reduction device. Both sucker rods are located inside a conventional production tubing of 2 7/8". This new approach has many advantages, in addition to the huge reduction of the loads to be withstood by the pumping unit 9.

In another embodiment of the present invention, could be considered the outside of the attachment means 14 that is shown in Figure 2 as a continuation of the tubing 5 but with larger diameter, inside which is fixed the set of fixed elements of the speed reducer 13.

In Figures 2C and 2E is shown that the attachment means 14 is coupled to the support element, but also has at least one conduit 19 which allows the passage through said load reduction device 10 of the fluid that is pressurized by said subsurface pump 4, and also can be observed the typical annular space between the casing 3 and the tubing 5.

In Figure 3A is shown the interaction between the driving transmission element 11, the speed reducer 13 and the driven transmission element 12, without showing the other elements. In the present application are not described the possibly needed components for guiding the movement or lubricate the elements of the load reduction device 10.

In order to facilitate the detailed description of the speed reducer 13, the following terms are defined:
Transmission element: is an element that transmits mechanical power. When these elements are required to have, a reciprocating motion may be used for example racks, double racks with teeth at two sides, chains, belts, piston rods with pistons for displacing fluid, slings, cables, one or more bars, a combination of bars and racks. For example, two separate racks could be used to fulfill the same function, considering in this case both racks as a single transmission element.

The transmission elements that develop a rotary motion are called rotary transmission elements. For this type of elements could be used for example gears, sprockets, pulleys, rollers, friction wheels, roller pinions. For example, two separate gears on the same axis of rotation could be used to fulfill the same function, considering, in this case, both gears as a single rotary transmission element.

When at the same axis of rotation there are rotary transmission elements of different diameter, the element of larger diameter is called rotary transmission element of larger diameter, and the element of smaller diameter is called rotary transmission element of smaller diameter.

When at the same axis of rotation there are one or more rotary transmission elements, it is considered as the inner side of said elements to the side that corresponds with the engagement of at least one of said rotary transmission elements with the driving transmission element 11. It is considered as the outer side of any of said elements to the opposite side to said inner side.

When indicated that a rotary transmission element is fixed with respect to another rotary transmission element located on the same axis of rotation, it means that said elements cannot have relative movement between them. This can be achieved for example by attaching said elements to a same shaft, or directly attaching said elements without using any shaft, or attaching them by any other known means.

When the transmission elements are fixed, they do not transmit power, but in this application, are called fixed transmission elements. If indicated that a transmission element is fixed, it means it is fixed with respect to the support element.

When indicated that a first transmission element is engaged with a second transmission element, between said elements there is no sliding motion but only substantially pure rolling motion, unless otherwise stated.

Revolute joint: is a connection between two elements or sets of elements, one with rotary motion and the other without rotary motion, wherein said connection allows the rotation around an axis but not the translation between both elements or sets of elements, which means that the element or set of elements that has a rotary motion can rotate but cannot have translations with respect to the other element or set of elements. In the present application is shown as an example of revolute joints to a combination of shafts and bearings, but said connection can be achieved by any other known method. It is called fixed revolute joint to the revolute joint which is fixed with respect to the support element, either directly or through an attachment means 14. When a rotary transmission element is connected to fixed revolute joints, said element can rotate but cannot have translations with respect to the support element. In practice, these connections usually allow small relative translations, but their main purpose is to allow free rotation maintaining fixed the axis of rotation.

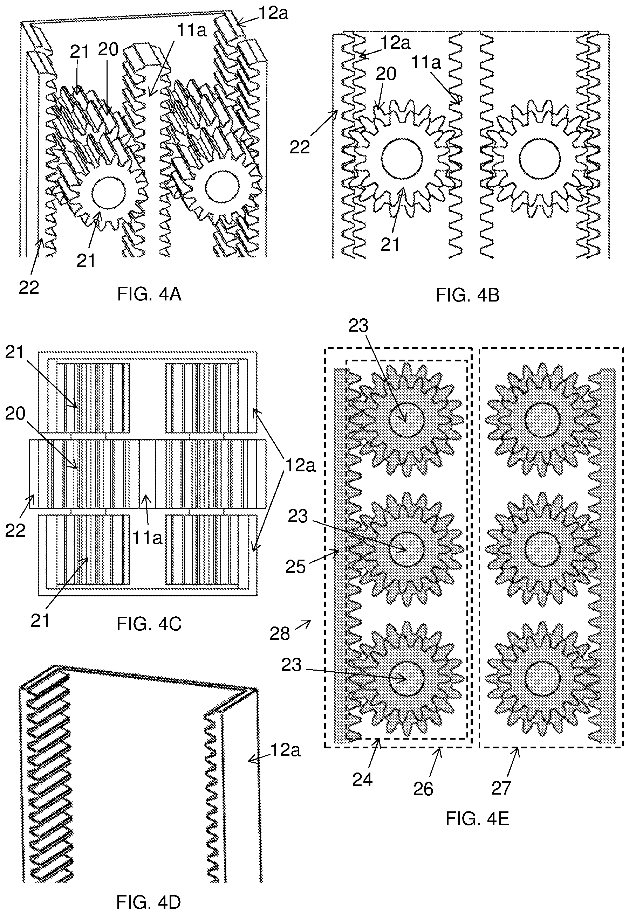

Set of movable elements: is the set of elements of the speed reducer 13 that interacts with the driving transmission element 11, the driven transmission element 12 and the set of fixed elements for producing a speed reduction. The speed reducer 13 comprises at least one of said sets of movable elements. In Figure 4E is indicated by the reference number 23 to each set of movable elements. The speed reducer 13 must have at least one set of movable elements 23, which means in some cases it may have several sets of movable elements 23 vertically separated. With the reference number 24 is indicated the totality of sets of movable elements 23 which are present in the speed reducer 13, which in the example of Figure 4E are three sets, while in other cases might be used only one, or two, or more than three sets of movable elements 23.

Set of fixed elements: is the set of elements of the speed reducer 13 which are fixed with respect to the support element and interact with said at least one set of movable elements 23. Said set of fixed elements is indicated by the reference number 25 in Figure 4E. It is also considered as a set to the sets comprising only one element, being this consideration valid for all the sets mentioned in the present application.

Symmetry: when the speed reducer 13 has some type of symmetry, is described only the working of the elements at one side of the plane of symmetry, because due to the symmetry at the opposite side the working is similar. For this reason, in Figure 4E, the set of elements comprising the speed reducer 13 includes only the elements on one side of the symmetry plane, which are represented by the first set of elements 26. The elements at the opposite side of the plane of symmetry, which are represented by the second set of elements 27, are considered to be a second set of elements 27, which is equal to the first set of elements 26 and is located symmetrically with respect to a plane or axis of symmetry, which in this case is the midplane of the driving transmission element 11, forming a symmetrical speed reducer 28. In other words, in this way can be formed a speed reducer 13 which is symmetrical, and comprising the set of elements 26 and the symmetrical set of elements 27. In all cases where a symmetrical mechanism is shown, which is represented by the symmetrical speed reducer 28, is valid the alternative of building a similar mechanism but without symmetry, which is represented by the set of elements 26.

In the different embodiments of the invention, the driving transmission element 11 and driven transmission element 12 are indicated by the same reference number but with the addition of different letters for better differentiation.

The first preferred embodiment of the speed reducer 13, shown in Figures 4A, 4B and 4C, has at least one set of movable elements 23, wherein each set comprises a rotary transmission element of larger diameter 20 and a rotary transmission element of smaller diameter 21; and has a set of fixed elements 25 comprising a fixed transmission element 22. The rotary transmission element of larger diameter 20, represented by a gear, engages on its inner side with the driving transmission element 11 a and engages on its outer side with the fixed transmission element 22, represented by a rack. With respect to said rotary transmission element of larger diameter 20 and having the same axis of rotation, is fixed the rotary transmission element of smaller diameter 21, represented by two separate gears of equal diameter, one on each side of the rotary transmission element of larger diameter 20. The rotary transmission element of smaller diameter 21 engages on its outer side with the driven transmission element 12a, represented by two bars with two racks each.

In Figure 4D is shown a detail of one of said two bars with two racks, which additionally can be joined in one piece following the principle shown in Figure 3B. In Figures 4A and 4B, one of the two bars with two racks that comprise the driven transmission element 12 is not shown.

In Figure 4E is represented the concept of distributing loads using more than one set of movable elements 23 in series, with parallel axes and vertically displaced, wherein all of said sets of movable elements 23 engage the same set of fixed elements 25, in the same way that is shown in Figures 3A and 3C. Said concept is valid for other embodiments of the present invention and any number of sets of movable elements 23 can be used.

The reduction ratio of the first preferred embodiment of the speed reducer 13 is (1 - D₂ / D₁) / 2, where D₁ is the diameter of the rotary transmission element of larger diameter 20 and D₂ is the diameter of the rotary transmission element of smaller diameter 21. This mechanism allows obtaining very small reduction ratios in a small cross-sectional area. In this example the reduction ratio is 0.1.

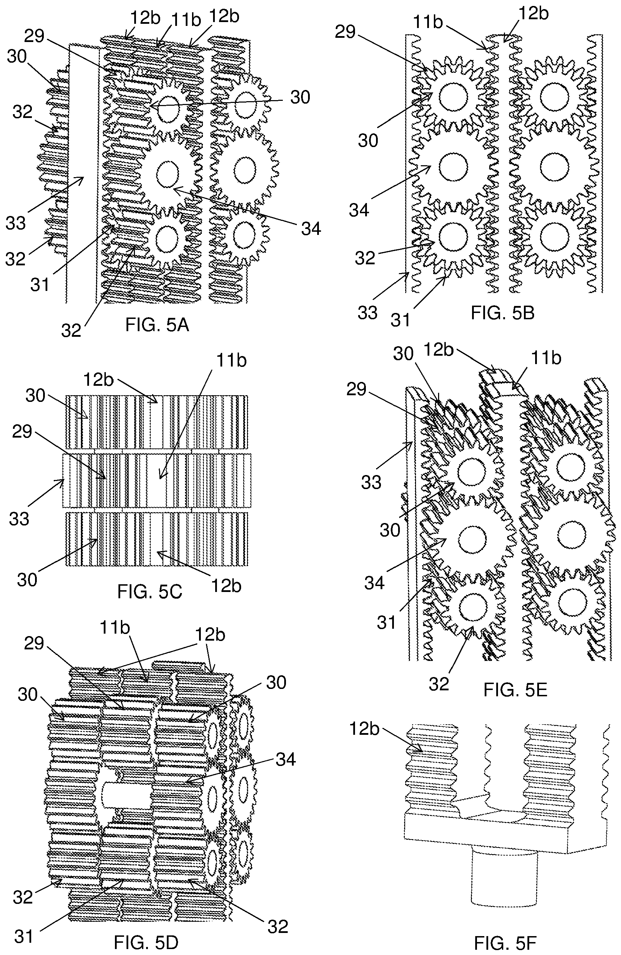

The second preferred embodiment of the speed reducer 13, shown in Figures 5A, 5B, 5C, 5D and 5E, has at least one set of movable elements 23, wherein each set comprises two rotary transmission elements of larger diameter 29 and 31, two rotary transmission elements of smaller diameter 30 and 32, and a rotary transmission element 34; and has a set of fixed elements 25 comprising a fixed transmission element 33. The operation is similar to that of the embodiment described above, but some elements are added in order to obtain a potentially more advantageous form for the driven transmission element 12b. The rotary transmission element of larger diameter 29, which is represented by a gear, engages its inner side with the driving transmission element 11b and its outer side with the fixed transmission element 33, represented by a rack. With respect to said rotary transmission element of larger diameter 29 and having the same axis of rotation, is fixed the rotary transmission element of smaller diameter 30, which is represented by two separate gears of equal diameter, one on each side of the rotary transmission element of larger diameter 29. A second rotary transmission element of larger diameter 31, with an axis of rotation which is parallel and located below of the axis of rotation of said rotary transmission element of larger diameter 29, also engages on its inner side with said driving transmission element 11 b. Said second rotary transmission element of larger diameter 31 also engages on its outer side with the fixed transmission element 33 and is represented by a gear. With respect to said second rotary transmission element of larger diameter 31 and having the same axis of rotation, is fixed a second rotary transmission element of smaller diameter 32, which is represented by two separate gears of equal diameter, one on each side of the second rotary transmission element of larger diameter 31. The rotary transmission element 34, which is represented by two gears connected by a shaft, engages on its upper side with said rotary transmission element of smaller diameter 30, and engages on its lower side with said second rotary transmission element of smaller diameter 32, rotating in the reverse direction to said elements. Said rotary transmission element 34 also engages on its inner side with the driven transmission element 12b. The rotary transmission element 34 is simultaneously engaged with three transmission elements and its center follows the movement of the center of the rotary transmission elements of smaller diameter 30 and 32. The driven transmission element 12b is represented by two separate double racks, which can be joined in one piece following the principle shown in Figure 5F. In Figure 5E one of the two double racks that comprise the driven transmission element 12b is not shown. In Figure 5D the fixed transmission element 33 is not shown.

The reduction ratio of the second preferred embodiment of the speed reducer 13 is (1 - D₂ / D₁) / 2, where D₁ is the diameter of the rotary transmission elements of larger diameter 29 and 31; while D₂ is the diameter of the rotary transmission elements of smaller diameter 30 and 32. In this example the reduction ratio is 0.1.

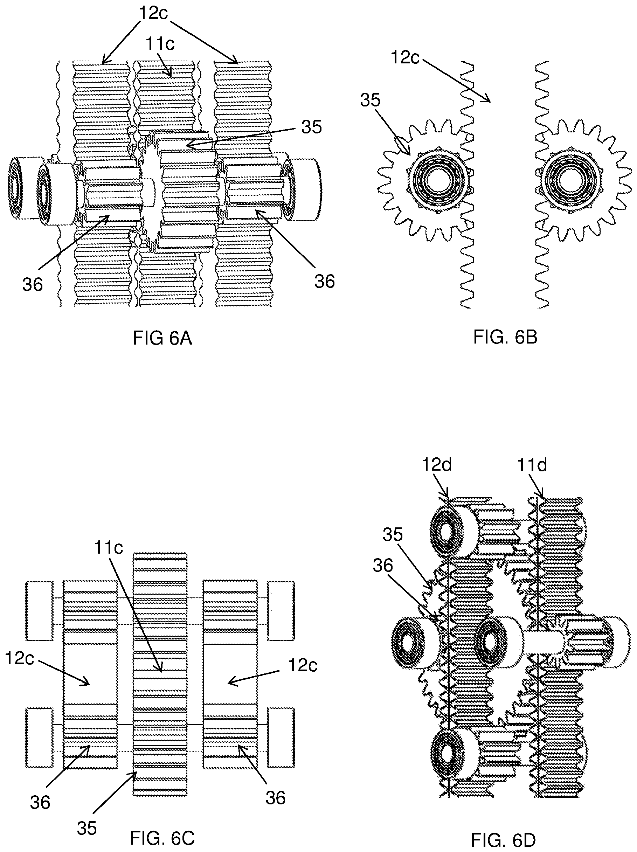

The third preferred embodiment of the speed reducer 13, shown in Figures 6A, 6B and 6C, has at least one set of movable elements 23, wherein each set comprises a rotary transmission element of larger diameter 35 and a rotary transmission element of smaller diameter 36; and has a set of fixed elements 25 comprising at least one fixed revolute joint. The rotary transmission element of larger diameter 35, which is represented by a gear, engages its inner side with the driving transmission element 11c. With respect to said rotary transmission element of larger diameter 35 and having the same axis of rotation, is fixed the rotary transmission element of smaller diameter 36, which is represented by two separate gears of equal diameter, one on each side of the rotary transmission element of larger diameter 35. At least one fixed revolute joint is connected to said rotary transmission elements of larger diameter 35 and of smaller diameter 36, which allows them to rotate around their axis of rotation. Said rotary transmission element of smaller diameter 36 engages on its inner side with the driven transmission element 12c, represented by two separate double racks, which can be joined following the principle shown in Figure 5F.

In Figure 6D is shown an example of a mechanism similar to the described above in Figures 6A, 6B and 6C but with an asymmetric arrangement, where the rotary transmission element of larger diameter is a single gear engaged with the driven transmission element 12d, and the driving transmission element 11d drives the mechanism. The other elements are shown with the same reference number because they work the same way as those elements shown in Figures 6A, 6B and 6C. It is observed that in this case it may be desirable to use a guidance system for the transmission elements to prevent the disengagement.

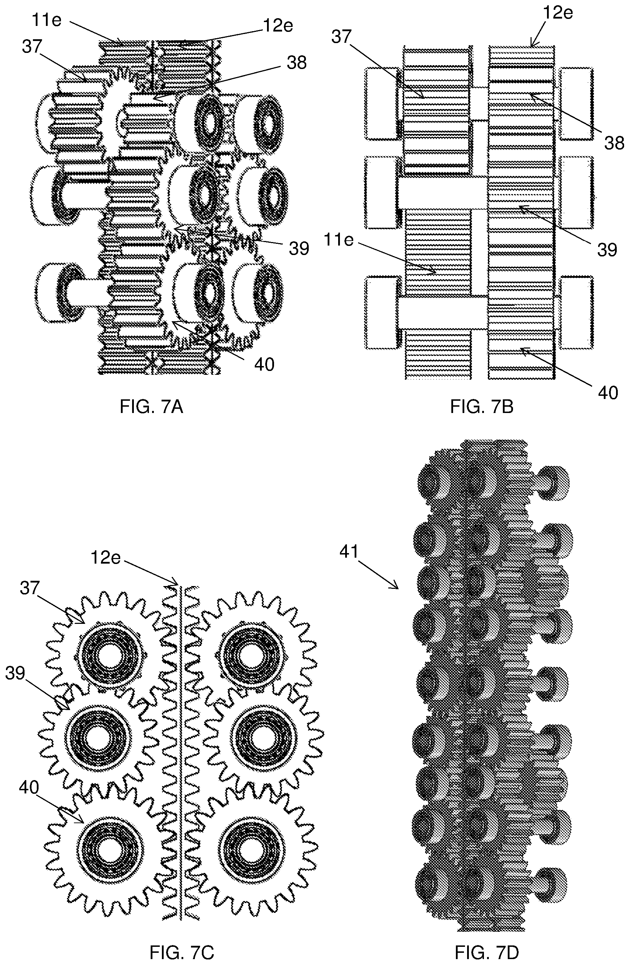

The fourth preferred embodiment of the speed reducer 13, shown in Figures 7A, 7B and 7C, has at least one set of movable elements 23, wherein each set comprises a rotary transmission element of larger diameter 37, a rotary transmission element of smaller diameter 38, an idler rotary transmission element 39 and a driven rotary transmission element 40; and has a set of fixed elements 25 comprising three sets of at least one fixed revolute joint each one, arranged in separate axes. The rotary transmission element of larger diameter 37, which is a gear, is located in a first axis of rotation and engages its inner side with the driving transmission element 11e. With respect to the rotary transmission element of larger diameter 37 and having the same axis of rotation, is fixed the rotary transmission element of smaller diameter 38, which is a gear. Said rotary transmission elements 37 and 38 are connected to a first set of at least one fixed revolute joint, which allow them to rotate around said first axis of rotation. The rotary transmission element of smaller diameter 38 engages on its lower side with the idler rotary transmission element 39, whose main function is to reverse the direction of rotation of the driven rotary transmission element 40. Said idler rotary transmission element 39 rotates around a second axis of rotation and is connected to a second set of at least one fixed revolute joint, which allows it to rotate around said second axis of rotation. The idler rotary transmission element 39 engages on its lower side with the driven rotary transmission element 40. Said driven rotary transmission element 40 rotates around a third axis of rotation and is connected to a third set of at least one fixed revolute joint, which allows it to rotate around said third axis of rotation. The driven rotary transmission element 40 engages on its inner side with the driven transmission element 12e. In this example a reduction ratio of 0.25 is achieved, but can be changed by altering the size relationships between the rotary transmission elements or by adding other axes of rotation with transmission elements.

In other embodiments, the rotary transmission elements of at least two different sets of movable elements 23, can engage each other maintaining their engagements with the elements of said set of fixed elements 25, as shown in the mechanism 41 of Figure 7D. This is also valid for the second preferred embodiment of the speed reducer 13 shown in Figures 5A, 5B, 5C, 5D and 5E.

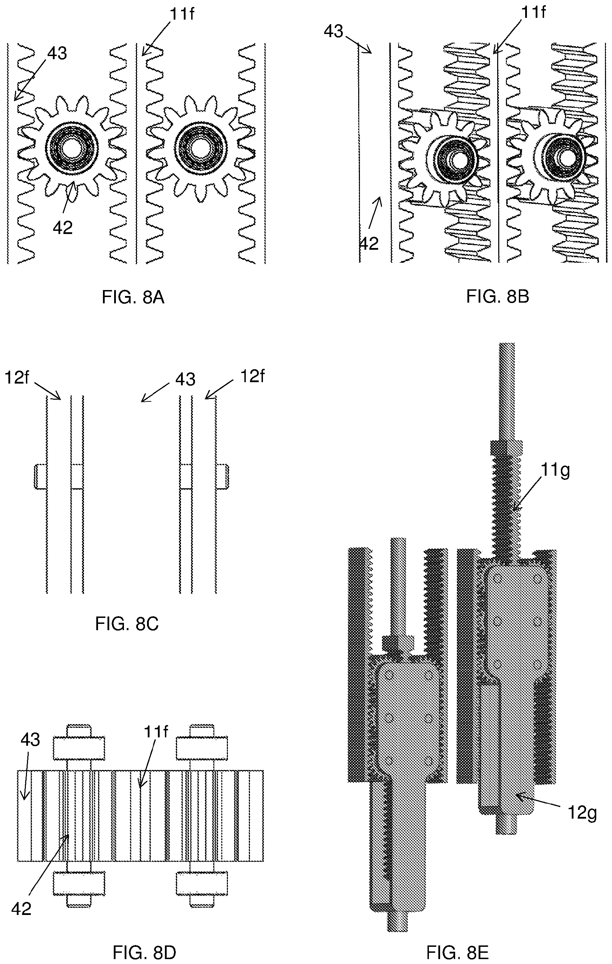

The fifth preferred embodiment of the speed reducer 13, shown in Figures 8A, 8B, 8C and 8D, has at least one set of movable elements 23, wherein each set comprises a rotary transmission element 42 and at least one revolute joint which connects said rotary transmission element 42 to the driven transmission element 12f; and has a set of fixed elements 25 comprising a fixed transmission element 43. The rotary transmission element 42 engages its inner side with the driving transmission element 11f and engages its outer side with the fixed transmission element 43. Said rotary transmission element 42 is connected by at least one revolute joint to the driven transmission element 12f, which is represented by two lateral bars which are only shown in Figure 8C. Said lateral bars can be joined in one piece following the principle shown in Figure 8E. In this example the rotary transmission element 42 is fixed to a shaft, where said shaft is connected by bearings to the driven transmission element 12f. By contrast, in the similar example that is shown in Figure 8E, the rotary transmission elements are directly fixed to bearings that allow them to rotate with respect to the driven transmission element 12f, producing the same effect that is achieved in the example of Figures 8A, 8B, 8C and 8D.

By geometric relationship, the center of rotary transmission element 42 is displaced half the distance that travels the driving transmission element 11f; therefore, the reduction ratio is 0.5. In Figures 8A, 8B and 8D the driven transmission element 12f is not shown. In Figure 8E is shown an example of symmetrical speed reducer where three sets of movable elements 23 are used.

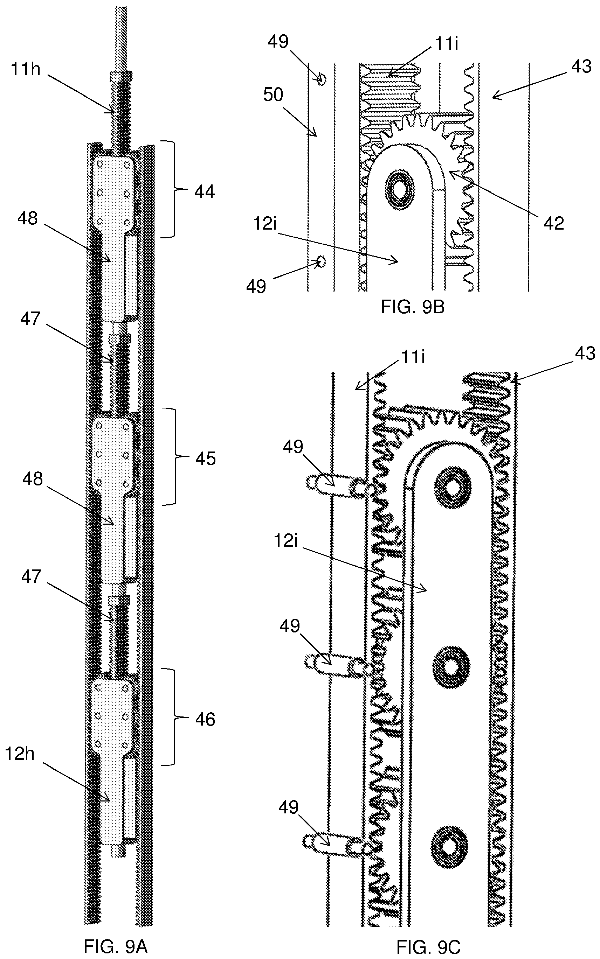

It is defined as a multiple speed reducer to the speed reducer comprising at least two speed reducers 13 arranged one above the other, with an upper speed reducer 44, a lower speed reducer 46, and a number equal to or greater than zero of intermediate speed reducers 45. In Figure 9A is shown an example of said multiple speed reducer, which comprises three speed reducers in series in order to multiply the reduction ratio, and where only one intermediate speed reducer 45 is used. Said upper speed reducer 44 is driven by the driving transmission element 11 h, while said lower speed reducer 46 drives the driven transmission element 12h. The intermediate driven transmission element 48 of any speed reducer located above said lower speed reducer 46, either the upper speed reducer 44 or the intermediate speed reducer 45, is coupled to the intermediate driving transmission element 47 of the speed reducer located immediately below, either the intermediate speed reducer 45 or the lower speed reducer 46. This configuration can be used for any of the embodiments of the present invention and/or for a combination in series of different types of speed reducers 13. The speed reducers shown in this embodiment are as those of the Figure 8E. The example of multiple speed reducer shown in Figure 9A has a reduction ratio of 0.125, because of the multiplication of the reduction ratio of three stages of reduction, where each one has a reduction ratio of 0.5. In Figure 9A are shown the three the reduction stages at the end of the upstroke.

In Figures 9B and 9C is shown another embodiment of the fifth preferred embodiment of the speed reducer 13, where is used the same mechanism described above but with an asymmetrical arrangement with respect to the driving transmission element 11 i, and where the driven transmission element 12i comprises two lateral bars. The other elements are shown with the same reference number because they work the same way as those elements shown in Figure 8. In asymmetric embodiments, may be advisable to use a guidance system to prevent the disengagement of the transmission element 11i. In the embodiment of Figures 9B and 9C, is used a series of rollers 49 that can freely rotate around axes which are fixed to the guide 50, allowing the displacement of the driving transmission element 11i, which is a rack. In said Figure 9C is shown an embodiment with three sets of movable elements 23 in series for distributing loads, and the guide 50 is no shown to better see the rollers 49. The reduction ratio of this asymmetrical embodiment is 0.5.

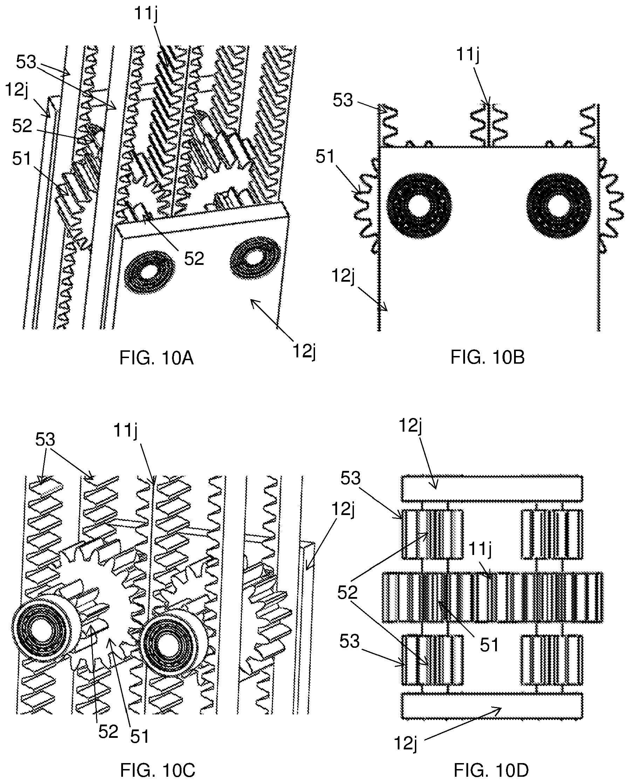

The sixth preferred embodiment of the speed reducer 13, shown in Figures 10A, 10B, 10C and 10D, has at least one set of movable elements 23, wherein each set comprises a rotary transmission element of larger diameter 51, a rotary transmission element of smaller diameter 52 and at least one revolute joint which connects said rotary transmission elements to the driven transmission element 12j; and has a set of fixed elements 25 comprising a fixed transmission element 53. The driving transmission element 11j engages the inner side of the rotary transmission element of larger diameter 51, which is represented by a gear. With respect to said rotary transmission element of larger diameter 51 and having the same axis of rotation, is fixed the rotary transmission element of smaller diameter 52, which is represented by two separate gears of equal diameter, one on each side of the rotary transmission element of larger diameter 51. The rotary transmission elements 51 and 52 are connected by at least one revolute joint to the driven transmission element 12j, represented by two lateral bars. In Figure 10C one of the two lateral bars that comprise the driven transmission element 12j is not shown. Said lateral bars can be joined in one piece following the principle shown in Figure 8E. The fixed transmission element 53 is represented by two separate racks. Said rotary transmission element of smaller diameter 52 engages on its outer side with said fixed transmission element 53.

The reduction ratio of the sixth preferred embodiment of the speed reducer 13 is D₂ / (D₁+D₂), where D₁ is the diameter of the rotary transmission element of larger diameter 51 and D₂ is the diameter of the rotary transmission element of smaller diameter 52.

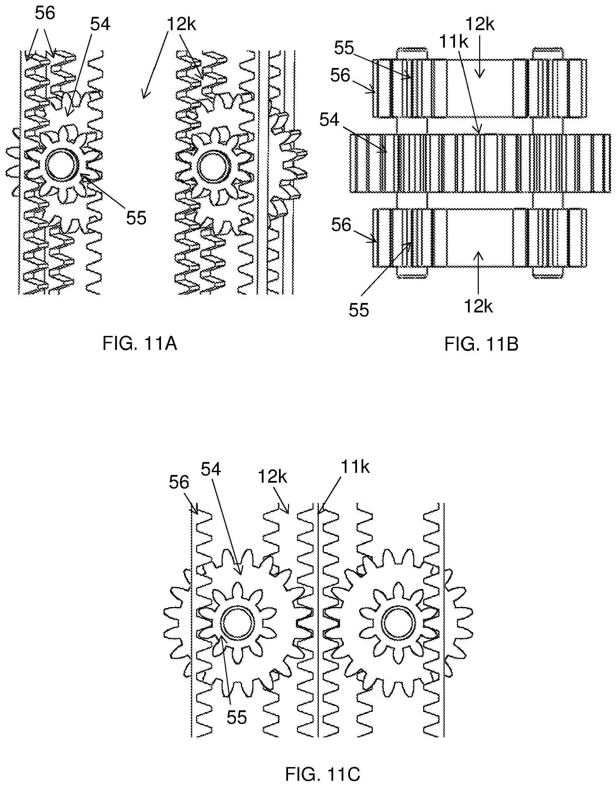

The seventh preferred embodiment of the speed reducer 13, shown in Figures 11A, 11B and 11C, has at least one set of movable elements 23, wherein each set comprises a rotary transmission element of larger diameter 54 and a rotary transmission element of smaller diameter 55; and has a set of fixed elements 25 comprising a fixed transmission element 56. The driving transmission element 11 k engages on the inner side of the rotary transmission element of larger diameter 54, which is a gear. With respect to said rotary transmission element of larger diameter 54 and having the same axis of rotation, is fixed the rotary transmission element of smaller diameter 55, which is represented by two separate gears of equal diameter, one on each side of the rotary transmission element of larger diameter 54.

The fixed transmission element 56 comprises, in this case, two separate racks. Said rotary transmission element of smaller diameter 55 engages on its outer side with said fixed transmission element 56, while on its inner side engages with the driven transmission element 12k, which is represented by two separate double racks, which can be joined in one piece following the principle shown in Figure 5F. In Figure 11C one of the two double racks that comprise the driven transmission element 12k is not shown.

The reduction ratio of the seventh preferred embodiment of the speed reducer 13 is 2D₂ / (D₁ + D₂), where D₁ is the diameter of the rotary transmission element of larger diameter 54 and D₂ is the diameter of the rotary transmission element of smaller diameter 55.

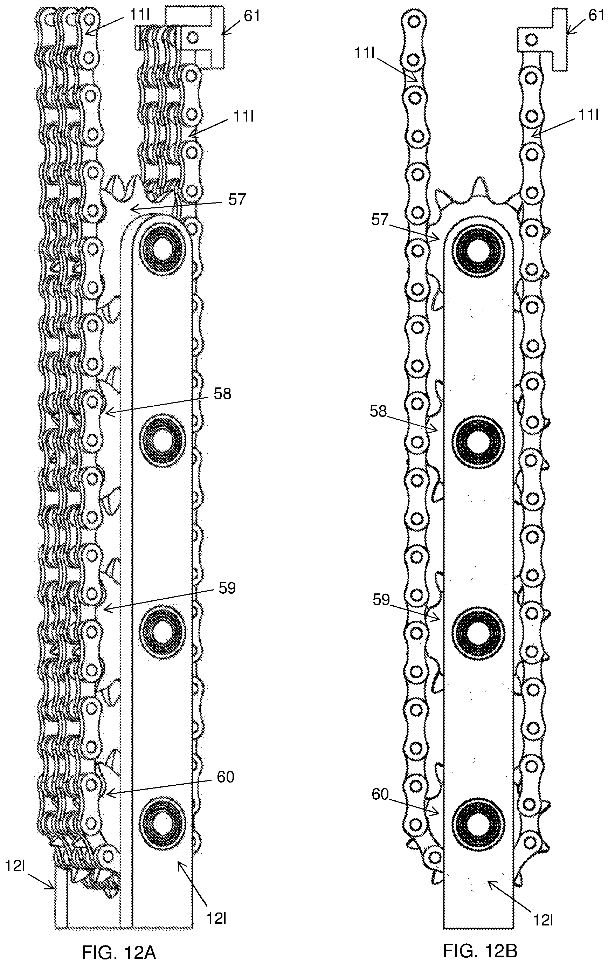

The eighth preferred embodiment of the speed reducer 13, shown in Figures 12A and 12B, has at least one set of movable elements 23, wherein each set comprises a rotary transmission element and at least one revolute joint which connects said rotary transmission element to the driven transmission element 12l, being used in this case, four sets of movable elements 23 represented by four rotary transmission elements 57, 58, 59 and 60 with their respective revolute joints; and has a set of fixed elements 25 comprising a fastening means 61 which attach substantially one of the ends of the driving transmission element 11l to the support element.

In this embodiment, the four rotary transmission elements 57, 58, 59 and 60 are used, represented by four double sprockets. The driving transmission element 11l has flexibility to bend, being in this case a chain. Said driving transmission element 11l is coupled substantially at one of its ends to the sucker rod string 6, and then engages with the rotary transmission element of said at least one set of movable elements 23, which comprises in this case to all the rotary transmission elements 57, 58, 59 and 60; and turns 180°. After turning 180°, continuous up to be coupled substantially at its other end to a fastening means 61, which keeps it fixed with respect to the support element. Said rotary transmission elements 57, 58, 59 and 60 are connected by at least one revolute joint to the driven transmission element 12l, which in this case comprises two lateral bars that can be joined forming a single piece. In some variations of the present embodiment, the engagement with pure rolling motion between the transmission elements could not be necessary.

The driving transmission element 11l has a reciprocating motion at one of its ends and is fixed with respect to the support element substantially at its other end. Therefore, when moving the rotary transmission elements 57, 58, 59 and 60, their centers travel half the distance traveled by the driving transmission element 11l at the side where it is not fixed, generating a reduction ratio of 0.5.

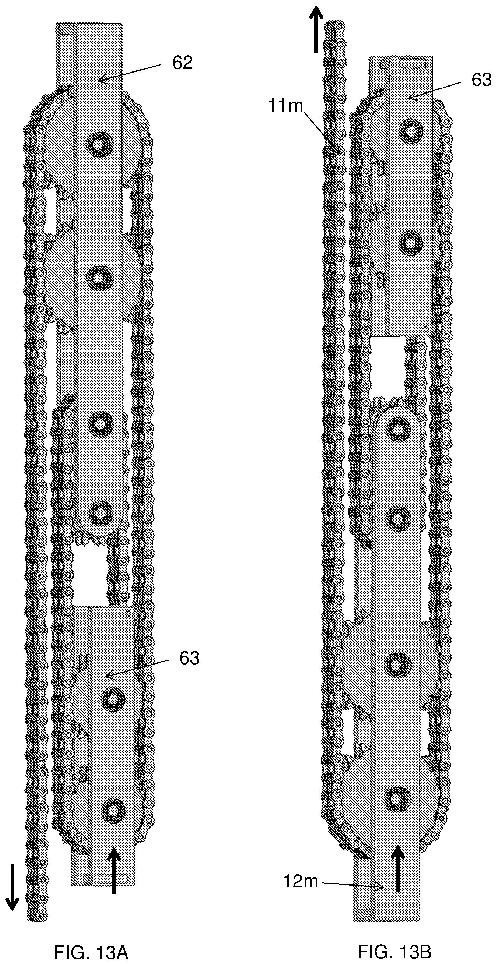

In the ninth preferred embodiment of the speed reducer 13, which is shown in Figure 13B, is used a conventional hoist or block and tackle arranged in an unconventional way. In Figure 13A is shown an example of conventional block and tackle. Said block and tackle comprises a system of rotary transmission elements with fixed axes which are connected by at least one revolute joint to an upper support 62, and a system of rotary transmission elements with movable axes, which are connected by at least one revolute joint to a lower support 63, which can move vertically. The upper support 62 is fixed and supports the block and tackle. The term "system of rotary transmission elements," either with fixed or movable axes, is equivalent to what in hoists or block and tackles is called system of pulleys. When applying a downward force to the free end of the chain shown in Figure 13A, the lower support 63 of the system of rotary transmission elements with movable axes rises, multiplying by four the force applied to the chain. In a hoist or block and tackle arranged in a conventional way, the movements of the input element and of the output element have opposite sense, which is not useful for the present invention. Therefore, it is necessary to modify the installation of the block and tackle.

In Figure 13B is shown the same block and tackle of Figure 13A installed upside down. The ninth preferred embodiment of the speed reducer 13 has a set of fixed elements 25 and at least one set of movable elements 23, which in combination comprise said block and tackle installed upside down, where the set of fixed elements 25 comprises the lower support 63; and said at least one set of movable elements 23 comprises a system of rotary transmission elements with fixed axes where each rotary transmission element is connected by at least one revolute joint to the lower support 63, and a system of rotary transmission elements with movable axes, where each rotary transmission element is connected by at least one revolute joint to the driven transmission element 12m. Said block and tackle is installed upside down, placing its upper support 62 below its lower support 63. Where said lower support 63 is fixed and supports the block and tackle. It is called lower support 63 despite being in the upper position for indicating that in a conventional installation of the block and tackle, said support is placed in the lower position. The opposite occurs with the upper support 62. Said upper support 62 moves vertically when it is driven by the driving transmission element 11m, being said upper support 62 equivalent to said driven transmission element 12m. The block and tackle is driven by said driving transmission element 11 m as in a conventional block and tackle. Said driving transmission element 11 m is in this case a chain. In some variations of the present embodiment, the engagement with pure rolling motion between the transmission elements could not be necessary. It is observed that modifying the installation in this way, with the movement of the driving transmission element 11 m, is achieved a movement in the same sense and with reduced speed in the driven transmission element 12m. In this particular case, the speed of the driven transmission element 12m is four times less than the speed of the driving transmission element 11 m, producing a force four times higher.

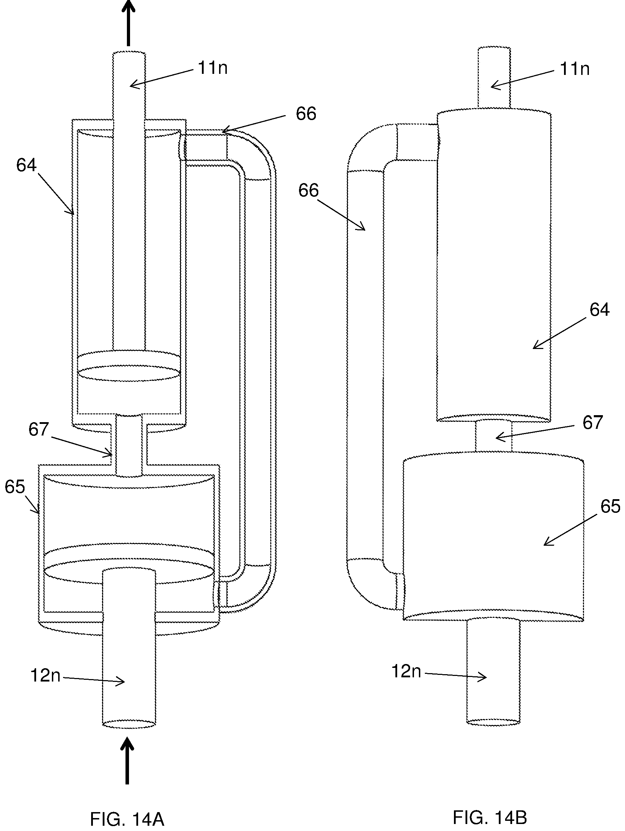

The tenth preferred embodiment of the speed reducer 13, shown in Figures 14A and 14B, has at least one set of movable elements 23 comprising a fluid; and has a set of fixed elements 25 comprising a fixed cylinder of smaller area 64, a fixed cylinder of larger area 65 and at least one conduit 66. The load reduction is produced by applying the principle of combining pistons with different diameters to displace a fluid, either hydraulic or pneumatic. The driving transmission element 11 n is a piston connected to a piston rod which moves within the fixed cylinder of smaller area 64. Said at least one conduit 66, which in this case is only one, connects the upper end of said fixed cylinder of smaller area 64 with the lower end of said fixed cylinder of larger area 65. During the upward travel of said driving transmission element 11 n, which is coupled to the sucker rod string 6, it produces a fluid flow through the conduit 66 which flows to the lower end of the fixed cylinder of larger area 65, within which moves the driven transmission element 12n, which is a piston connected to a piston rod. The purpose of this arrangement is that the fluid works under compression.

The conduit 67 connects the lower end of said fixed cylinder of smaller area 64 with the upper end of said fixed cylinder of larger area 65, but said conduit 67 could not be used in other embodiments. In Figures 14A and 14B is only shown a cut of the cylinders and the conduits. In this example the reduction ratio is 0.37.

## Claims

1. A load reduction device (10) for pumping systems in a deep well (1); that is actuated by a sucker rod string (6) with reciprocating motion and which drives a subsurface pump (4), **characterized by**:
- a driving transmission element (11) that is coupled to said sucker rod string (6);
- a speed reducer (13) comprising at least one set of movable elements (23) and a set of fixed elements (25);
- where said speed reducer (13) engages said driving transmission element (11) and is driven by it;
- a driven transmission element (12), that engages said speed reducer (13) and is driven by it;
- where said driven transmission element (12) moves in the same direction and sense but at a lower speed than said driving transmission element (11);
- and where said driven transmission element (12) is coupled to said subsurface pump (4).

2. The load reduction device of claim 1, **characterized in that**:
- said speed reducer (13) comprises an upper speed reducer (44), a lower speed reducer (46), and a number equal to or greater than zero of intermediate speed reducers (45) placed one in top of the other;
- where said upper speed reducer (44) is driven by said driving transmission element (11 h);
- where said lower speed reducer (46) engages said driven transmission element (12h) and drives it;
- and where the intermediate driven transmission element (48) of any speed reducer (44, 45) located above said lower speed reducer (46) is coupled to the intermediate driving transmission element (47) of the speed reducer (45, 46) located immediately below.

3. The load reduction device of claim 1, **characterized in that**:
- said at least one set of movable elements (23) comprises:
- a rotary transmission element of larger diameter (20) that engages on its inner side with said driving transmission element (11 a);
- a rotary transmission element of smaller diameter (21) which is fixed with respect to said rotary transmission element of larger diameter (20) and having the same axis of rotation;
- where said rotary transmission element of smaller diameter (21) engages on its outer side with said driven transmission element (12a);
- and said set of fixed elements (25) comprises:
- a fixed transmission element (22) on which said rotary transmission element of larger diameter (20) engages its outer side.

4. The load reduction device of claim 1, **characterized in that**:
- said at least one set of movable elements (23) comprises:
- a rotary transmission element of larger diameter (29) that engages on its inner side with said driving transmission element (11 b);
- a rotary transmission element of smaller diameter (30) which is fixed with respect to said rotary transmission element of larger diameter (29) and having the same axis of rotation;
- a second rotary transmission element of larger diameter (31) with an axis of rotation which is parallel and located below of the axis of rotation of said rotary transmission element of larger diameter (29);
- where said second rotary transmission element of larger diameter (31) also engages on its inner side with said driving transmission element (11 b);
- a second rotary transmission element of smaller diameter (32), which is fixed with respect to said second rotary transmission element of larger diameter (31) and having the same axis of rotation;
- a rotary transmission element (34), which engages on its upper side with said rotary transmission element of smaller diameter (30), and engages on its lower side with said second rotary transmission element of smaller diameter (32), rotating in the reverse direction to said elements;
- where said rotary transmission element (34) also engages on its inner side with said driven transmission element (12b);
- and said set of fixed elements (25) comprises:
- a fixed transmission element (33) on which said rotary transmission element of larger diameter (29) and said second rotary transmission element of larger diameter (31) engage their outer side.

5. The load reduction device of claim 1, **characterized in that**:
- said at least one set of movable elements (23) comprises:
- a rotary transmission element of larger diameter (35) that engages on its inner side with said driving transmission element (11c, 11d);
- a rotary transmission element of smaller diameter (36) which is fixed with respect to said rotary transmission element of larger diameter (35) and having the same axis of rotation;
- where said rotary transmission element of smaller diameter (36) engages on its inner side with said driven transmission element (12c, 12d);
- and said set of fixed elements (25) comprises:
- at least one fixed revolute joint, which is connected to said rotary transmission elements of larger diameter (35) and of smaller diameter (36) and allows them to rotate around their axis of rotation.

6. The load reduction device of claim 1, **characterized in that**:
- said at least one set of movable elements (23) comprises:
- a rotary transmission element of larger diameter (37), which is located in a first axis of rotation and engages its inner side with the driving transmission element (11e);
- a rotary transmission element of smaller diameter (38) which is fixed with respect to said rotary transmission element of larger diameter (37) and having the same axis of rotation;
- an idler rotary transmission element (39), which is located in a second axis of rotation and engages with the lower side of said rotary transmission element of smaller diameter (38), rotating in the reverse direction to said element;
- a driven rotary transmission element (40), which is located in a third axis of rotation and engages with the lower side of said idler rotary transmission element (39);
- where said driven rotary transmission element (40) engages on its inner side with said driven transmission element (12e);
- and said set of fixed elements (25) comprises:
- a first set of at least one fixed revolute joint, which is connected to said rotary transmission elements of larger (37) and of smaller diameter (38) and allows them to rotate around said first axis of rotation;
- a second set of at least one fixed revolute joint, which is connected to said idler rotary transmission element (39) and allows it to rotate around said second axis of rotation;
- and a third set of at least one fixed revolute joint, which is connected to said driven rotary transmission element (40) and allows it to rotate around said third axis of rotation.

7. The load reduction device of claim 1, **characterized in that**:
- said at least one set of movable elements (23) comprises:
- a rotary transmission element (42) that engages on its inner side with said driving transmission element (11f, 11g, 11 i);
- where said rotary transmission element (42) is connected by at least one revolute joint to said driven transmission element (12f, 12g, 12i);
- and said set of fixed elements (25) comprises:
- a fixed transmission element (43) on which said rotary transmission element (42) engages its outer side.

8. The load reduction device of claim 1, **characterized in that**:
- said at least one set of movable elements (23) comprises:
- a rotary transmission element of larger diameter (51) that engages on its inner side with said driving transmission element (11j);
- a rotary transmission element of smaller diameter (52) which is fixed with respect to said rotary transmission element of larger diameter (51) and having the same axis of rotation;
- where said rotary transmission elements (51, 52) are connected by at least one revolute joint to said driven transmission element (12j);
- and said set of fixed elements (25) comprises:
- a fixed transmission element (53) on which said rotary transmission element of smaller diameter (52) engages its outer side.

9. The load reduction device of claim 1, **characterized in that**:
- said at least one set of movable elements (23) comprises:
- a rotary transmission element of larger diameter (54) that engages on its inner side with said driving transmission element (11 k);
- a rotary transmission element of smaller diameter (55) which is fixed with respect to said rotary transmission element of larger diameter (54) and having the same axis of rotation;
- where said rotary transmission element of smaller diameter (55) engages on its inner side with a said driven transmission element (12k);
- and said set of fixed elements (25) comprises:
- a fixed transmission element (56) on which said rotary transmission element of smaller diameter (55) engages its outer side.

10. The load reduction device of claim 1, **characterized in that**:
- said at least one set of movable elements (23) comprises:
- a rotary transmission element (57, 58, 59, 60);
- at least one revolute joint which connects said rotary transmission element (57, 58, 59, 60) to the driven transmission element 12l;
- where said driving transmission element (11l) is coupled substantially at one of its ends to the sucker rod string (6);
- where said driving transmission element 11l engages with the rotary transmission element (57, 58, 59, 60) of said at least one set of movable elements (23), and turns 180°;
- and where said set of fixed elements (25) comprises:
- a fastening means (61), which keeps fixed substantially at its other end to said driving transmission element (11l).

11. The load reduction device of claim 1, **characterized in that**:
- said speed reducer (13) has a set of fixed elements (25) and at least one set of movable elements (23) which in combination comprise a block and tackle installed upside down;
- said set of fixed elements (25) comprises:
- a lower support (63), which is fixed and supports the block and tackle installed upside down;
- said at least one set of movable elements (23) comprises:
- a system of rotary transmission elements with fixed axes where each rotary transmission element is connected by at least one revolute joint to said lower support (63);
- a system of rotary transmission elements with movable axes where each rotary transmission element is connected by at least one revolute joint to said driven transmission element (12m);
- and where said block and tackle is driven by said driving transmission element (11m).

12. The load reduction device of claim 1, **characterized in that**:
the driving transmission element (11 n) is a piston;
the driven transmission element (12n);
the set of fixed elements 25 comprises:
a fixed cylinder of smaller area (64) inside of which moves the driving transmission element (11 n);
a fixed cylinder of larger area (65) inside of which moves the driving transmission element (12n);
at least one conduit (66) to connects the fixed cylinder of smaller area (64) with the bottom end of the fixed cylinder of larger area (65);
said at least one set of movable elements (23) comprises:
a fluid that flows through the conduit (66) when the driving transmission element (11 n) and the driven transmission element (12n) move.

13. The load reduction device of claims 4 or 6, **characterized in that** the rotary transmission elements of at least two different sets of movable elements (23), engage each other (41) maintaining their engagements with the elements of said set of fixed elements (25).

14. The load reduction device of any one of claims 3 to 9, **characterized in that** said speed reducer (13) also comprises a second set of elements (27), which is equal to the first set of elements (26) and is located symmetrically with respect to the midplane of the driving transmission element (11), forming a symmetrical speed reducer (28).

15. A deep well (1) pumping system comprising a load reduction device (10) according to the previous claims, which comprises:
- a pumping unit (9), which generates a reciprocating motion;
- a sucker rod string (6), which is coupled to said pumping unit (9) and transmits reciprocating motion;
- a subsurface pump (4);
- where the driving transmission element (11) of said load reduction device (10) is coupled to said sucker rod string (6);
- where the driven transmission element (12) of said load reduction device (10) is coupled to said subsurface pump (4);
- and a support element (3, 5) with respect to which is fixed the set of fixed elements (25) of the speed reducer (13) of said load reduction device (10).

16. The deep well (1) pumping system of claim 15, **characterized in that**:
the driven transmission element (12) are coupled to the sinker bars (7);
the sinker bars (7) are coupled to said subsurface pump (4).

17. The deep well (1) pumping system of claim 15, **characterized in that** said support element (3, 5) is a tubing (5).

18. The deep well (1) pumping system of claim 15, **characterized in that** said support element (3, 5) is a casing (3).

19. The deep well (1) pumping system of claim 15, **characterized in that** said set of fixed elements (25) is fixed to said support element (3, 5) through an attachment means (14).
